# EUROPÄISCHE PATENTANMELDUNG

(11) **EP 1 950 672 A1**
(43) Veröffentlichungstag der Anmeldung: **30.07.2008**
(21) Anmeldenummer: 08001299.0
(22) Anmeldetag: 24.01.2008
(51) Int. Cl.: G06F 17/30

(54) **Verfahren und Datenverarbeitungssystem zum gesteuerten Abfragen strukturiert gespeicherter Informationen**

(30) Priorität: 25.01.2007 DE 102007004684
(71) Anmelder: Deutsche Telekom AG, 53113 Bonn (DE)
(72) Erfinder: Runge, Fred, 15838 Wünsdorf (DE); Burkhardt Felix, 10625 Berlin (DE); Liu Jin, 12357 Berlin (DE); Müller Christel, 15732 Schulzendorf (DE)
(74) Vertreter: Blumbach - Zinngrebe

(57) **Zusammenfassung**

Für ein verbessertes Abfragen von Informationen, die unter Zuhilfenahme einer Ontologie hierarchisch strukturiert gespeichert sind, und zur Erweiterung und/oder Korrektur solcher Ontologien sieht die Erfindung ein Verfahren zum gesteuerten Abfragen von in einem Datenverarbeitungssystem (10) strukturiert gespeicherten Informationen mittels eines Dialogsystems (300) vor, welches das Bereitstellen einer ersten Ontologie (400, 410) zum strukturierten Speichern von Informationen und das Bereitstellen wenigstens einer in dem Dialogsystem (300) zum Auswerten von Nutzereingaben vorgesehenen Eingabegrammatik (320) in Abhängigkeit der ersten Ontologie umfasst.

Ferner sieht die Erfindung ein zur Durchführung des Verfahrens geeignetes Datenverarbeitungssystem (10) vor.

## Beschreibung

Die Erfindung betrifft ein Verfahren und ein Datenverarbeitungssystem zum gesteuerten Abfragen strukturiert gespeicherter Informationen mittels eines Dialogsystems.

In den letzten Jahren ist in der Informationstechnologie, insbesondere im Bereich des Wissensmanagements der Begriff der Ontologie gebräuchlich geworden. Der ursprünglich aus dem Bereich der Philosophie stammende Begriff der Ontologie beschreibt allgemein die explizite und formalsprachliche Spezifikation einer Konzeptualisierung von Phänomenen in einem Realitätsausschnitt, die von mehreren Akteuren gemeinsam verwendet wird. In der Informationstechnologie umfassen die Akteure typischerweise Menschen und Maschinen. Für eine Kommunikation zwischen Mensch und Maschine ist es notwendig, dass beide ein gemeinsames Vokabular nutzen. Dies kann mit Hilfe von Ontologien erreicht werden.

Mit Ontologien wird dementsprechend versucht, zumindest einen Teilbereich der realen Welt abzubilden. Die Beziehungen und Zusammenhänge von Objekten werden analysiert und zu einem Vokabular zusammengefasst, mit dem Wissen dargestellt, gespeichert und mit den entsprechenden Mechanismen neues Wissen generiert werden kann.

Eine Ontologie umfasst somit typischerweise ein Objektmodell in Form einer hierarchischen Klassenstruktur, das der Strukturierung von Daten dient. Klassen sind in diesem Zusammenhang Zusammenfassungen gleichartiger Objekte, so genannter Instanzen, zu einer Gestaltungs- oder Implementierungseinheit. Als Instanzen werden dementsprechend einzelne Erfahrungsobjekte, Entitäten oder Individuen bezeichnet, die zu einer Klasse als Denkeinheit zusammengefasst sind. Neben Klassen und deren Instanzen umfasst eine Ontologie typischerweise Relationen zwischen Objekten und Eigenschaften oder Attribute von Objekten.

Die Ontologie beschreibt somit ein allgemeines Vokabular in einem Wissensfeld, auch als Wissensdomäne bezeichnet, und die Bedeutung einzelner Einheiten in diesem Vokabular und damit eine gemeinsame Basis für ein geteiltes Verständnis für Menschen und Maschinen.

Für den Zugriff auf die in einer Ontologie enthaltenen Informationen ist die Nutzung von Dialogsystemen bekannt, die der sprachlichen und analog der multimodalen Interaktion mit mindestens einem Nutzer dienen. Beispielsweise in DE 103 18 333 A1 werden Sprachdialogsysteme beschrieben, welche der sprachgesteuerten Abfrage von Ontologien dienen.

Bekannt sind ebenfalls Verfahren zur Extraktion von Ontologien aus einsprachigen, geschriebenen Texten durch Anwendung von Extraktionsregelwerken, wobei vorteilhaft nach Dokumenten gesucht wird, die das zum Erstellen der Ontologie erforderliche Domänenwissen widerspiegeln. Dazu kann für vorhandene Referenzdokumente mit bekannten Verfahren nach ähnlichen Dokumenten gesucht werden.

Der allgemeine Aufbau von Dialogsystemen, die der sprachlichen und analog der multimodalen Interaktion mit mindestens einem Nutzer dienen, ist beispielsweise bekannt aus dem Arbeitsentwurf des World Wide Web Consortium (W3C) "Introduction and Overview of W3C Speech Interface Framework" (W3C Working Draft vom 4. Dezember 2000).

In den Systemen, die ein Dialogsystem umfassen, ist üblicherweise vorgesehen, dass ein Nutzer Anfragen an das System stellt und Antworten gemäß der Wissensbasis, die zum Beispiel in Form einer Ontologie mit entsprechenden konkreten Instanzen vorliegt, erhält. Zum Ableiten der Antworten kann auch eine Inferenzmaschine eingesetzt werden, wie beispielsweise in WO 2005/055134 A2 beschrieben.

Die in diesen Systemen verwendete Grammatik zur Beschreibung möglicher Nutzereingaben wird typischerweise von einem Systemadministrator fest vorgegeben. Dies erfordert einen hohen Aufwand seitens des Systemadministrators und bietet gleichzeitig nur ein geringes Maß an Flexibilität.

Der vorliegenden Erfindung liegt daher die Aufgabe zugrunde, einen verbesserten Weg zum Abfragen von Informationen aufzuzeigen, die unter Zuhilfenahme einer Ontologie hierarchisch strukturiert gespeichert sind.

Eine weitere Aufgabe der Erfindung besteht darin, einen verbesserten Weg zur Erweiterung und/oder Korrektur von Ontologien aufzuzeigen.

Diese Aufgaben werden durch ein Verfahren gemäß Anspruch 1, sowie ein Datenverarbeitungssystem nach Anspruch 23 gelöst. Vorteilhafte Ausführungsformen und Weiterbildungen sind in den jeweiligen Unteransprüchen umschrieben.

Dementsprechend umfasst ein erfindungsgemäßes Verfahren zum gesteuerten Abfragen von in einem Datenverarbeitungssystem strukturiert gespeicherter Informationen mittels eines Dialogsystems das Bereitstellen einer ersten Ontologie zum strukturierten Speichern von Informationen und das Bereitstellen wenigstens einer in dem Dialogsystem zum Auswerten von Nutzereingabenvorgesehenen Eingabegrammatik in Abhängigkeit der ersten Ontologie.

Wie bereits oben beschrieben, umfasst eine Ontologie zur Strukturierung von Daten typischerweise ein Objektmodell in Form einer hierarchischen Klassenstruktur. Dementsprechend umfasst die erste Ontologie vorteilhaft eine hierarchische Klassenstruktur mit Klassen, Instanzen von Klassen, Beziehungen zwischen Klassen und/oder Attributen.

Eine Grammatik bezeichnet eine strukturierte Beschreibung möglicher auszuwertender Eingaben durch einen Nutzer oder durch das Datenverarbeitungssystem selbst. Beispiele möglicher Nutzereingaben sind gesprochene Sprache, Texteingaben, Eingaben mittels eines Griffels über ein Touchscreen oder mittels einer Kamera aufgenommene Gesichtsmimik eines Nutzers. Vom System bereitgestellte Eingaben sind zum Beispiel Textzeichenfolgen in Dokumenten, aufgezeichnete Sprache oder Multimediadateien. Eine Grammatik stellt eine Form eines Medienmodells dar und umfasst vorzugsweise eine Modell zur Beschreibung der Reihenfolge, in der Eingaben wie zum Beispiel Wörter von einem Medienerkenner wie zum Beispiel einem Spracherkenner erwartet werden und/oder in der Ausgaben mit bestimmten Informationsgehalten generiert werden. Eine Grammatik kann vorteilhaft speziell als Eingabe- oder Ausgabegrammatik ausgebildet sein.

In einer bevorzugten Ausführungsform des Verfahrens umfasst das Bereitstellen der wenigstens einen Eingabegrammatik das Generieren der Eingabegrammatik aus der ersten Ontologie in Abhängigkeit vorgegebener Generierungsregeln. Alternativ wird eine Initialgrammatik als erster Entwurf einer Eingabegrammatik vorgegeben, der beispielsweise durch einen Systemadministrator manuell erstellt wird. Diese Initialgrammatik wird dann vorzugsweise in Abhängigkeit der ersten Ontologie und vorgegebener Erweiterungs- und/oder Korrekturregeln erweitert und/oder korrigiert.

Besonders vorteilhaft umfasst das Verfahren das Erweitern der ersten Ontologie. Dementsprechend wird vorteilhaft auch eine als Basisgrammatik aus der ersten Ontologie in Abhängigkeit vorgegebener Generierungsregeln generierte Eingabegrammatik in Abhängigkeit der ersten Ontologie und vorgegebener Erweiterungs- und/oder Korrekturregeln erweitert und/oder korrigiert, wenn beispielsweise die erste Ontologie ihrerseits erweitert und/oder geändert wurde.

In einer Variante zur Erweiterung der ersten Ontologie werden aus Dateien und/oder zweiten Ontologien mittels Such- und/oder Extraktionsregeln Informationen gewonnen, um welche die erste Ontologie erweitert wird. Das Erweitern der ersten Ontologie kann auch vorteilhaft durch Einfügen von Verweisen auf wenigstens eine Datei und/oder eine zweite Ontologie und/oder ein Element einer zweiten Ontologie erfolgen. Ein solcher Verweis kann beispielsweise einen Dateipfad, eine Internetadresse oder eine andere Adressierung eines Speicherortes, sowie gegebenenfalls zusätzliche Parameter umfassen. Ferner kann auch das Bereitstellen der ersten Ontologie das Bereitstellen einer Ontologie umfassen, die derartige Verweise beinhaltet und somit als.verteilte Ontologie bereitgestellt wird. Da die Eingabegrammatik zur Auswertung von Dateien und/oder zweiten Ontologien genutzt werden kann, die Informationen zur Erweiterung der ersten Ontologie enthalten, werden die Such- und/oder Extraktionsregeln vorzugsweise in Abhängigkeit der Eingabegrammatik generiert und/oder angepasst.

Auf diese Weise wird die Eingabegrammatik als zusätzliche Wissensquelle zur automatischen Gewinnung neuer Informationen aus Dokumenten, Dateien oder Ontologien genutzt, die beispielsweise in Datenbanken des Systems und/oder im Internet vorliegen, wobei diese gegebenenfalls unterschiedliche mediale Repräsentationen aufweisen können.

Die erste Ontologie kann vorteilhaft selbst linguistische Informationen enthalten. In diesem Fall sieht das Verfahren vorzugsweise vor, dass die Such- und/oder Extraktionsregeln in Abhängigkeit von diesen in der ersten Ontologie hinterlegten linguistischen Informationen generiert und/oder angepasst werden. Ein Anpassen der Such- und/oder Extraktionsregeln kann selbstverständlich vorteilhaft auch ein Erweitern der Such- und/oder Extraktionsregeln umfassen.

Bei Anpassen der Such- und/oder Extraktionsregeln in Abhängigkeit der Eingabegrammatik, wird die erste Ontologie in Abhängigkeit der Eingabegrammatik erweitert. Andererseits wird, wie oben beschrieben, die Eingabegrammatik vorteilhaft in Abhängigkeit der ersten Ontologie erweitert. Dies ermöglicht somit ein wechselseitiges, iteratives Erweitern der ersten Ontologie und der Eingabegrammatik.

Dementsprechend sieht das Verfahren vorteilhaft vor, das Erweitern und/oder Korrigieren der Eingabegrammatik in Abhängigkeit von der ersten Ontologie und vorgegebenen Erweiterungs- und/oder Korrekturregeln, das Anpassen der Such- und/oder Extraktionsregeln zur Erweiterung der ersten Ontologie in Abhängigkeit der Eingabegrammatik, und das Erweitern.der ersten Ontologie um Informationen, die mittels der Such- und/oder Extraktionsregeln aus Dateien und/oder zweiten Ontologien gewonnen werden iterativ auszuführen.

Da das Verfahren dem gesteuerten Abfragen von in einem Datenverarbeitungssystem strukturiert gespeicherten Informationen mittels eines Dialogsystems dient, sieht das Verfahren vorzugsweise das Abfragen von Informationen durch einen Nutzer vor. Das Bearbeiten einer Informationsabfrage durch einen Nutzer umfasst vorteilhaft das Registrieren von Nutzereingaben mittels einer Eingabeeinheit des Dialogsystems, das Ermitteln einer Nutzeranfrage durch Auswerten der registrierten Nutzereingaben, das Extrahieren angefragter Informationen aus der ersten Ontologie in Abhängigkeit der ermittelten Nutzeranfrage, und das Ausgeben der extrahierten Informationen mittels einer Ausgabeeinheit des Dialogsystems.

Ferner können vorteilhaft Informationen in der ersten Ontologie durch einen Nutzer eingetragen und/oder korrigiert werden. Zu diesem Zweck sieht das Verfahren vorzugsweise das Registrieren von Nutzereingaben mittels einer Eingabeeinheit des Dialogsystems, das Ermitteln einer Eintragungs- oder Korrekturanfrage durch Auswerten der registrierten Nutzereingaben und das Erweitern oder Korrigieren der ersten Ontologie in Abhängigkeit der ermittelten Eintragungs- oder Korrekturanfrage vor.

Da Nutzereingaben vorteilhaft mittels natürlicher Sprache erfolgen, umfasst das Registrieren und/oder Auswerten von Nutzereingaben vorteilhaft das Ausführen wenigstens einer Spracherkennungs-, Freisprech-, Echokompensations-, Sprecherverifizierungs-, Sprechererkennungs-, Sprecherklassifizierungs-, Sprachidentifizierung-Sprachsynthese- und/oder Geräuschkompensations-Funktion.

Bei einer Erweiterung der ersten Ontologie durch Extrahieren von Informationen aus unterschiedlichen Wissensquellen kann es zu Konflikten innerhalb der ersten Ontologie kommen, wobei Konflikte beispielsweise in fehlenden oder widersprüchlichen Beziehungen zwischen Elementen der ersten Ontologie bestehen. Als Konflikt kann aber beispielsweise auch das Fehlen eines Attributwertes eines Elementes der ersten Ontologie definiert werden

Vorteilhaft umfasst das Verfahren ein automatisches Erkennen von Konflikten in der Struktur und/oder zwischen den Instanzen der ersten Ontologie, wobei mit besonderem Vorteil bei Erkennen eines Konfliktes automatisch eine Anfrage an einen Nutzer generiert wird.

Die Anfrage an einen Nutzer dient der Beseitigung erkannter Konflikte innerhalb der ersten Ontologie, wobei beispielsweise durch eine Nutzereingabe in Antwort auf die Anfrage entscheiden wird, welche von zwei sich widersprechenden Beziehungen zwischen Elementen der ersten Ontologie die korrekte ist und dementsprechend beibehalten werden soll und welche aus der ersten Ontologie entfernt werden soll.

Zu diesem Zweck sieht das Verfahren vorzugsweise vor, dass wenigstens ein Nutzer automatisch ausgewählt wird, durch das Dialogsystem automatisch eine Kommunikationsverbindung mit einem Telekommunikationsendgerät des ausgewählten Nutzers hergestellt wird, und die generierte Anfrage zu dem Endgerät übermittelt wird. Zur Beseitigung des erkannten Konfliktes umfasst das Verfahren dementsprechend vorteilhaft ein Eintragen und/oder Korrigieren von Informationen in der ersten Ontologie durch den ausgewählten Nutzer in Antwort auf die übermittelte Anfrage.

Somit ermöglicht das Verfahren, Wissen von einem Nutzer durch das Dialogsystem zur Eintragung in die erste Ontologie abzufragen, wie es in der zwischenmenschlichen Kommunikation beim Austausch von Wissen üblich ist.

Zum automatischen Auswählen eines Nutzers ist vorzugsweise für wenigstens einen Nutzer eine Nutzerkennung und wenigstens ein zugeordneter Wissensbereich einer Ontologie in dem Dialogsystem hinterlegt.

Um gezielt einen Nutzer anzufragen, von dem erwartet werden kann, dass er über das erforderliche Wissen zur Beseitigung eines Konfliktes verfügt, werden anfragbare Nutzer vorteilhaft vorgegebenen Nutzerklassen zugeordnet, wobei wenigstens einer Nutzerklasse wenigstens ein Wissensbereich einer Ontologie zugeordnet ist.

Um auf eine größere Anzahl von Wissensquellen zugreifen zu können und die gespeicherten Informationen einer größeren Anzahl von Nutzern zugänglich machen zu können, umfasst die erste Ontologie vorteilhaft Informationen in unterschiedlichen Sprachen. In dieser Ausführungsform umfasst das Verfahren vorteilhaft ein Übersetzen von in der ersten Ontologie enthaltenen Informationen von einer ersten Sprache in wenigstens eine zweite Sprache mittels maschineller Übersetzung. Besonders bevorzugt werden mittels maschineller Übersetzung in der ersten Ontologie enthaltene Informationen synchron in mehreren Sprachen vorgehalten. Zu diesem Zweck erfolgt vorzugsweise bei Erweitern und/oder Korrigieren der ersten Ontologie ein automatisches Übersetzen der jeweils erweiterten und/oder korrigierten Informationen in die jeweils anderen von der ersten Ontologie unterstützten Sprachen. Beispielsweise können als unterstützte Sprachen Deutsch, Englisch und Französisch vorgegeben sein.

Das beschriebene Verfahren ermöglicht es somit, Eingabegrammatiken, beispielsweise für Spracherkennungsmodule in mehreren Sprachen, für eine multimodale und/oder unimodale Interaktion mit einem Dialogsystem aus Ontologien zu generieren. Ferner ermöglicht das Verfahren vorteilhaft, unter Nutzung dieser Eingabegrammatiken und/oder Ergänzungsgrammatiken Nutzereingaben und/oder Informationsextraktionen aus Dokumenten auszuwerten. Vorzugsweise werden Dokumente ausgewertet, in denen Elemente einer Ontologie beschrieben werden, wobei die Auswertung eine Ergänzung und/oder Korrektur der Ontologien um die beschriebenen Elemente erlaubt.

Besonders vorteilhaft werden dabei Verfahren zur Suche nach Informationen in mehreren Medien und/oder Verfahren zur Informationsextraktion und/oder Zusammenfassung von Informationen in Dokumenten in unterschiedlicher Sprachen eingesetzt, um nach Begriffen zu suchen, durch die das Ontologiesystem ergänzt werden kann und die wiederum der Ergänzung der Eingabegrammatiken mit Hilfe der automatischen Grammatikgenerierung dienen. Auf die gleiche Weise können mit Hilfe der Grammatik auch neue Beziehungsdefinitionen in einer internen Datenbasis oder im Internet gefunden werden. In beiden Fällen kann vorteilhaft auch zusätzlich auf Ressourcen eines semantischen Netzwerkes im Internet zugegriffen werden, in dem zu mindestens einem in der Ontologie vorhandenen Element schon Beziehungen zu anderen Elementen beschrieben werden. Die durch die beschriebenen Suchverfahren erweiterte Ontologie oder mindestens ein Teil davon kann nun wiederum durch multi- oder unimodale Interaktion mit dem Nutzer, der sowohl direkt und/oder über mindestens ein Netzwerk mit dem Dialogsystem kommunizieren kann, ergänzt und/oder korrigiert werden.

Ein erfindungsgemäßes Datenverarbeitungssystem zur Bereitstellung des Zugriffs auf strukturiert gespeicherte Informationen umfasst wenigstens einen Speicher, in dem Informationen mittels einer ersten Ontologie strukturiert gespeichert sind, ein Dialogsystem für den Nutzerzugriff auf die gespeicherten Informationen, und Mittel zum Generieren und/oder Anpassen der Eingabegrammatik des Dialogsystems in Abhängigkeit der ersten Ontologie und vorgegebener Generierungs- und/oder Anpassungsregeln. Das Dialogsystem umfasst wenigstens eine Eingabeeinheit zum Registrieren von Nutzereingaben, eine Eingabegrammatik zur Auswertung registrierter Nutzereingaben, eine Ausgabegrammatik zum Generieren von Ausgangssignalen und eine Ausgabeeinheit zur Ausgabe generierter Ausgangssignale.

Vorteilhaft umfasst das Datenverarbeitungssystem ferner Mittel zum Bereitstellen einer Initialgrammatik als Eingabegrammatik, die beispielsweise manuell von einem Systemadministrator erstellt wurde.

Zur Erweiterung der ersten Ontologie in Abhängigkeit vorgegebener Such- und/oder Extraktionsregeln umfasst das Datenverarbeitungssystem vorteilhaft Mittel zum Suchen und/oder Extrahieren von Informationen aus Dateien und/oder zweiten Ontologien, wobei die Informationen auch über Verknüpfungen eingebunden werden können. Dementsprechend ist das Mittel zum Suchen und/oder Extrahieren von Informationen vorteilhaft dazu ausgebildet, die erste Ontologie durch Einfügen wenigstens eines Verweises auf wenigstens eine Datei und/oder eine zweite Ontologie und/oder ein Element einer zweiten Ontologie zu erweitern, wobei die zweite Ontologie ihrerseits auch als verteilte Ontologie bereitgestellt sein kann. Wie bereits oben beschrieben, kann ein Verweis beispielsweise einen Dateipfad, eine Internetadresse oder eine andere Adressierung eines Speicherortes, sowie gegebenenfalls zusätzliche Parameter umfassen, wobei durch geeignete Parameter auch beispielsweise ein ausgewählter Teil einer zweiten Ontologie referenziert werden kann.

Ferner sind vorteilhaft Mittel zum Generieren und/oder Anpassen der Such- und/oder Extraktionsregeln in Abhängigkeit der Eingabegrammatik und/oder in Abhängigkeit von in der ersten Ontologie hinterlegten linguistischen Informationen vorgesehen.

Das Dialogsystem ist dazu ausgebildet, Informationsanfragen von Nutzern zu erkennen. Dementsprechend umfasst das Datenverarbeitungssystem vorzugsweise Mittel zum Extrahieren von Informationen aus der ersten Ontologie in Antwort auf eine durch das Dialogsystem erkannte Nutzeranfrage. Ferner können die in der ersten Ontologie gespeicherten Informationen durch Nutzereingaben erweitert und/oder korrigiert werden. Dementsprechend umfasst das Datenverarbeitungssystem vorteilhaft Mittel zum Eintragen und/oder Korrigieren von Informationen in der ersten Ontologie in Antwort auf eine durch das Dialogsystem erkannte Eintragungs- oder Korrekturanfrage eines Nutzers.

Zum Auswerten von Nutzereingaben umfasst das Dialogsystem bevorzugt wenigstens ein Funktionsmodul zum Ausführen einer Spracherkennungs-, Freisprech-, Echokompensations-, Sprecherverifizierungs-, Sprechererkennungs-, Sprecherklassifizierungs-, Sprachidentifizierungs-, Sprachsynthese- und/oder Geräuschkompensations-Funktion.

Da wie oben beschrieben bei der Erweiterung der ersten Ontologie Konflikte innerhalb der Ontologie auftreten können, sind ferner mit Vorteil Mittel zum automatischen Erkennen von Konflikten in der Struktur und/oder zwischen den Instanzen der ersten Ontologie vorgesehen.

In einer besonders bevorzugten Ausführungsform umfasst das Datenverarbeitungssystem Mittel zum automatischen Generieren einer an einen Nutzer gerichteten Anfrage bei Erkennen eines Konfliktes, die dazu dient die erkannten Konflikte zu beseitigen. Dementsprechend ist das Dialogsystem vorzugsweise dazu ausgebildet, automatisch wenigstens einen Nutzer auszuwählen, eine Kommunikationsverbindung zu einem Telekommunikationsendgerät des ausgewählten Nutzers aufzubauen, und eine generierte, an den ausgewählten Nutzer gerichtete Anfrage zu dessen Endgerät zu übermitteln.

Zum Auswählen eines zur Beseitigung des Konfliktes geeigneten Nutzers umfasst das Dialogsystem bevorzugt Speichermittel zum Hinterlegen einer Nutzerkennung und wenigstens eines zugeordneten Wissensbereiches einer Ontologie für wenigstens einen Nutzer. Besonders vorteilhaft sind die Nutzer, für die eine Nutzerkennung hinterlegt ist, in Nutzerklassen aufgeteilt, wobei den Nutzerklassen jeweils wenigstens ein Wissensbereich einer Ontologie zugeordnet ist. Dementsprechend ist im Dialogsystem vorzugsweise für jede Nutzerkennung eine Zuordnung zu wenigstens einer Nutzerklasse hinterlegt. Den einer Nutzerklasse zugeordneten Nutzern kann zusätzlich beispielsweise eine Rangfolge zugeordnet sein, um die Reihenfolge festzulegen, in der versucht wird, eine Anfrage an die Nutzer der Nutzerklasse zu übermitteln.

Um einem möglichst breiten Nutzerkreis geeignete Informationen zur Verfügung stellen zu können, umfasst die erste Ontologie vorteilhaft Informationen in unterschiedlichen Sprachen. Um die Informationen in der ersten Ontologie auch bei deren Erweiterung für mehrere Sprachen synchron zu halten, sind vorteilhaft Mittel zum maschinellen Übersetzen von in der ersten Ontologie enthaltenen Informationen von einer ersten Sprache in wenigstens eine zweite Sprache vorgesehen.

Die Erfindung wird nachfolgend beispielhaft anhand bevorzugter Ausführungsformen und unter Bezugnahme auf die beigefügten Zeichnungen genauer beschrieben. Dabei bezeichnen gleiche Bezugszeichen in den Zeichnungen gleiche oder ähnliche Teile.

Es zeigen:
- Fig. 1:: eine schematische Darstellung einer bevorzugten Ausführungsform eines erfindungsgemäßen Datenverarbeitungssystems,
- Fig. 2:: eine schematische Darstellung der Elemente einer beispielhaften Ontologie,
- Fig. 3:: ein Beispiel für eine Erweiterung der Ontologie aus Fig. 2, und
- Fig. 4:: ein Beispiel für eine Ontologie, welche linguistische Eigenschaften als Elemente umfasst.

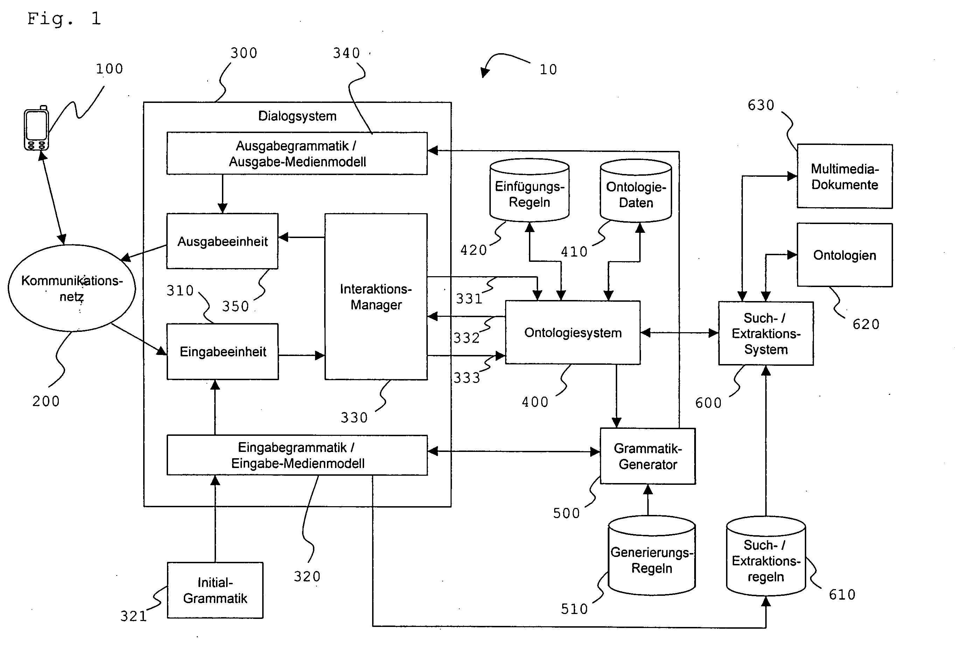

In dem in Fig. 1 dargestellten Ausführungsbeispiel eines Datenverarbeitungssystems 10 ist ein erster Ontologieentwurf in dem mit 400 bezeichneten Ontologiesystem hinterlegt, der beispielsweise über,nicht dargestellte, administrative Schnittstellen erstellt wurde. Alternativ oder zusätzlich werden Dokumente 630 in gegebenenfalls unterschiedlichen medialen Repräsentationen und/oder separate Ontologien 620 zur Verfügung gestellt, auf die mittels eines Such- und Extraktionssystems 600 Extraktionsverfahren unter Zuhilfenahme von vorgegebenen Such- und/oder Extraktionsregeln 610 zur Gewinnung von Ontologien bzw. Teilontologien angewendet werden, um einen ersten Ontologieentwurf in dem Ontologiesystem 400 bereitzustellen. Die so gewonnenen Ontologien bzw. Teilontologien können gegebenenfalls wiederum über administrative Schnittstellen überarbeitet werden.

Im dargestellten Ausführungsbeispiel sind Inhalte der im Ontologiesystem 400 hinterlegten Ontologie, mit Werten belegte Einträge der Ontologie und Instanzen der Ontologie in einer separaten Datenbank 410 gespeichert, auf die das Ontologiesystem 400 Zugriff hat. Soweit nicht anders angegeben, bezeichnet der Begriff Ontologie im Folgenden die im Ontologiesystem 400 hinterlegte Ontologie einschließlich der in der Datenbank 410 gespeicherten Daten bezeichnet.

Davon ausgehend, dass einerseits innerhalb einer Ontologie Elemente einschließlich deren Beziehungen dargestellt werden, andererseits durch Medienmodelle und/oder Eingabegrammatiken die Ausdrucksweise beschrieben wird, wie auf diese Ontologieinhalte zugegriffen wird, haben die Erfinder erkannt, dass in der im Ontologiesystem 400 enthaltenen Ontologie auch Informationen enthalten sind, aus denen eine Eingabegrammatik 320 generiert werden kann.

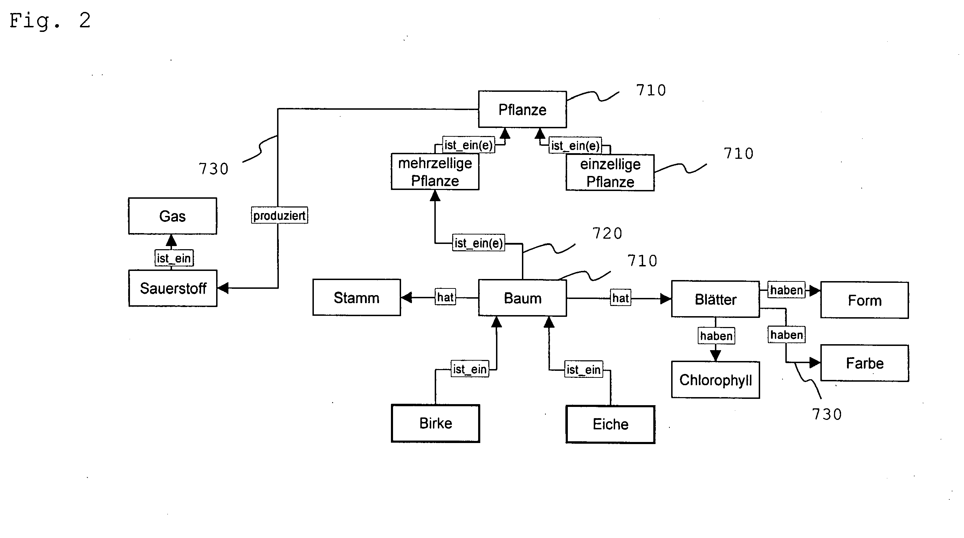

In Fig. 2 ist ein Beispiel eines ersten Ontologieentwurfes dargestellt. Bezeichnungen oder Namen von Klassen 710, wie zum Beispiel "Pflanze" oder "Baum" und/oder deren Instanzen 750 wie zum Beispiel "Eiche" oder "Birke" und Bezeichnungen oder Namen von Beziehungen 720 und 730 wie zum Beispiel "ist ein(e)", "produziert" oder "haben" als Elemente der Ontologie beschreiben dementsprechend Folgen von Ausdrücken, welche sich ebenfalls zum Beispiel in der Eingabegrammatik 320 des Sprachdialogsystems 300 wiederfinden.

Auf diese Art können, wieder Bezug nehmend auf Fig. 1, mittels eines Grammatik-Generators 500 unter Beachtung von Generierungsregeln 510 einfache Grammatiken 320 und 340 zur Kommunikation eines Nutzers mit einem Dialogsystem 300, welches als Schnittstelle zur Abfrage, Erweiterung und/oder Korrektur einer Ontologie für den Nutzer dient, generiert werden.

Da das Dialogsystem im dargestellten Ausführungsbeispiel für eine multimediale und multimodale Ein- und Ausgabe ausgebildet sein kann, beinhalten die Komponenten 320 und 340 allgemein ein Eingabe- bzw. Ausgabe-Medienmodell, die jedoch vorteilhaft als Eingabe- bzw. Ausgabegrammatiken ausgebildet sind. Eine multimodale Interaktion bezeichnet dabei eine Kommunikation mit einem System über mehrere Modi, zum Beispiel über Sprache und/oder Tastatur- und/oder Griffeleingaben.

Zur flexibleren Gestaltung dieser Grammatiken können in die Ontologie des Ontologiesystems 400 zusätzlich weitere linguistische Informationen oder Eigenschaften aufgenommen werden. Diese Informationen können zum Beispiel aus lokal und/oder im Netz oder Internet verfügbaren Wörterbüchern extrahiert werden und/oder Modelle, wie zum Beispiel n-gram-Modelle mit möglichen Vorgängern und Nachfolgern von Begriffen aus der Ontologie, darstellen, welche aus den oben genannten und ähnlichen Dokumenten 630 oder anderen Ontologien 620 gewonnen werden. Die generierten Grammatiken und/oder Medienmodelle 320 und 340 erhalten damit neben den ursprünglich enthaltenen, gegebenenfalls administrativ in Form einer Intitialgrammatik 321 erstellten, Modellen für allgemeine Dialogschritte, zum Beispiel Beantwortung von Systemfragen mit "Ja" oder "Nein", nach dem Generierungsprozess auch Begriffe und Formulierungen, welche aus der Ontologie abgeleitet wurden.

Die Eingabegrammatik 320, die ein Eingabe- oder Sprachmodell repräsentiert, kann beispielsweise als EBNF-Grammatik in Textform und/oder als statistisch basierte n-gram-Grammatik ausgebildet sein. Andere Grammatikrepräsentationen liegen jedoch ebenso im Rahmen der Erfindung.

Die linguistischen Eigenschaften von Elementen in der Ontologie können neben Synonymen zum Beispiel auch Antonyme von Bezeichnungen und/oder Beziehungen, Wortarten, Genus, andere Begleitworte und/oder Stellvertreterworte wie zum Beispiel mögliche Adverbien, Präpositionen oder Pronomen enthalten. In diesem Zusammenhang sei darauf hingewiesen, dass Synonyme keine linguistische Eigenschaft im eigentlichen Sinne darstellen und das vorliegend beschriebene Verfahren vorzugsweise in der Ontologie hinterlegte linguistische Eigenschaften vorsieht, die über das Vorsehen von Synonymen hinausgehen. Aus den Wortarten wie Substantiv, Verb oder Adjektiv lässt sich beispielsweise die Wortstellung für die Generierung der Grammatik ableiten, der Genus kann beispielsweise der Bestimmung möglicher Artikel für die entsprechende Sprache dienen. Diese Informationen können auch aus den Dokumenten 630 und/oder anderen Ontologien 620 gewonnen werden. Auch können zu den Dokumenten 630 ähnliche Dokumente beispielsweise im Internet gesucht und zur Informationsgewinnung verwendet werden.

Da die Grammatik, insbesondere die Eingabegramnmatik 320 und Teile von ihr auch ein Modell für eine domänenspezifische Sprache, fachsprachlich auch als "Language Model" bezeichnet, darstellen, ist sie nicht nur für entsprechende Nutzereingaben, sondern auch für lokal und/oder im Netz verfügbare Dokumente nutzbar, in denen diese Sprache zur Darstellung von Informationen Anwendung findet. Die so generierte Grammatik 320 kann somit nun wiederum der Generierung, Ergänzung und/oder Korrektur der Such- und/oder Extraktionsregeln 610 dienen.

Die Extraktionsregeln 610, die nun auch Regeln enthalten, die aus der Grammatik bzw. dem Sprachmodell 320 automatisch hergeleitet wurden, sind auch Grundlage für die Extraktion von Informationen für die Ontologie aus Dokumenten, die das Resultat der automatischen Suche nach ähnlichen Dokumenten darstellen.

Auf Basis der mit Hilfe von Suche und Extraktion in die Ontologie des Ontologiesystems 400 eingefügten Informationen kann nun wiederum die Grammatik 320 und darauf folgend mit Hilfe von gegebenenfalls weiteren abgeleiteten Such- und/oder Extraktionsregeln 610 die Ontologie in 400 erneut ergänzt werden, bis dieser iterative Prozess, in den gegebenenfalls auch administrativ eingegriffen werden kann, zu einem Abschluss gekommen ist.

Nachdem ein festgelegter Stand der Ontologie erreicht worden ist, sind erste Anfragen des Nutzers, repräsentiert durch dessen Telekommuniaktionsendgerät 100, nach aus der Ontologie abgeleiteten Informationen über mindestens einen Kanal eines zur Kommunikation für die erforderlichen Medien geeigneten Kommunikationsnetzes 200 und mindestens ein Dialogsystem 300 möglich.

Zu diesem Zweck baut der Nutzer mittels des Endgerätes 100 über das Kommunikationsnetz 200 eine Verbindung zum Dialogsystem 300 auf und übermittelt eine Suchanfrage. Je nach Einsatzzweck kann das Endgerät 100 beispielsweise als Telefon, Smartphone oder PDA ausgebildet sein und gegebenenfalls eine Browser zur Bedienung durch den Nutzer aufweisen. Das Kommunikationsnetz 200 kann dementsprechend beispielsweise als Telefonnnetz, Mobilfunknetz oder als WAN/LAN ausgebildet sein und drahtgebundene oder drahtlose Verbindungen unterstützen. Die Auswertung der entsprechenden Nutzereingaben erfolgt im Dialogsystem 200 in der Eingabeeinheit 310 mit Hilfe der Eingabegrammatik 320, wobei die Auswertung eine semantische Interpretation umfassen kann. Die ausgewerteten Nutzereingaben werden von der Eingabeeinheit 310 einem Interaktionsmanager 330 zugeleitet, von dem herausgefilterte Suchanfragen 333 in einem vordefinierten Format an das Ontologiesystem 400 weitergeleitet werden.

Die vom Ontologiesystem 400 in Abhängigkeit der Suchanfrage aus der Ontologie abgeleiteten Informationen 332 werden zurück an den Interaktionsmanager 330 übermittelt, der diese an die Ausgabeeinheit 350 weiterleitet. Die Ausgabeeinheit 350 generiert in Abhängigkeit der Ausgabegrammatik 340 die Ausgabedaten, die über das Kommunikationsnetz 200 an das Endgerät 100 des anfragenden Nutzers übermittelt werden.

Da in der Eingabegrammatik 320 aufgrund der Generierung oder Erweiterung in Abhängigkeit der Ontologie auch Formulierungen zur Definition möglicher Beziehungen enthalten sind, hat der Nutzer auch die Möglichkeit, über den Dialog mittels des Dialogsystems 300 neue Begriffe und/oder Formulierungen, sofern sie im Medienmodell bzw. der Eingabegrammatik 320 enthalten sind, mit entsprechenden Beziehungen in die Ontologie einzugeben und damit die Möglichkeit, die Ontologie über den Dialog zu ergänzen und/oder zu korrigieren. Entsprechende Erweiterungs- oder Korrekturanfragen 331 werden nach Auswertung durch die Eingabeeinheit 310 in einem definierten Format durch den Interaktionsmanager 330 dem Ontologiesystem 400 zugeleitet.

Die aus der automatischen Generierung, Erweiterung und/oder Korrektur der Ontologie resultierenden Einträge können auch Konflikte, wie zum Beispiel offene oder widersprüchliche Beziehungen oder fehlende Attributwerte enthalten, die nach automatischer Auswertung der Ontologie durch das Ontologiesystem 400 in einem festgelegten Format dem Interaktionsmanager 330 durch eine entsprechende Nachricht 332 mitgeteilt oder auch durch den Interaktionsmanager 330 selbst festgestellt werden. Dieser kann aus diesen Strukturkonflikten Anfragen an den Nutzer 100 generieren, beispielsweise in Form einer Frage "Was ist Rotbuche?".

Mögliche Antworten des Nutzers im Rahmen der in der Ontologie abgebildeten Wissensdomäne werden wiederum mit Hilfe der Eingabegrammatik 320 ausgewertet und die herausgefilterten Informationen 331 werden, gegebenenfalls unter Beachtung definierter Einfügungsregeln 420, in die Ontologie eingetragen. Zur Auflösung von Konflikten in der Ontologie kann auch das Dialogsystem 300 selbst aktiv werden und Verbindung zu Nutzern aufnehmen und aus den Konflikten abgeleitete Fragen stellen. Die Nutzer können zu diesem Zweck einer im Dialogsystem 300 hinterlegten Liste mit entsprechenden Nutzerkennungen entnommen werden. Als Nutzerkennung kann beispielsweise wenigstens eine der Informationen Rufnummer, CLI (Calling Line Identification), HLR (Home Location Register), IP-Adresse, Endgerätekennung, Name, Namenskürzel, Pseudonym oder Alias hinterlegt sein.

Zur Verifizierung des Nutzers können Verfahren der Sprecherverifizierung oder Sprechererkennung und/oder der Sprecherklassifizierung und/oder bei entsprechender Ausstattung des Endgerätes der Gesichtserkennung und/oder Fingerabdruckerkennung und/oder andere biometrische Verfahren zum Einsatz kommen.

Gemeinsam mit den Nutzerkennungen können z.B.. auch personalisiert die gewünschten Sprachen und/oder Modi zur Kommunikation zwischen Nutzer 100 und Dialogsystem 300 und/oder Daten über die Wissensdomäne abgespeichert werden. Diese Daten dienen dann zum Beispiel der Auswahl der Grammatik und/oder des Medienmodells für die gewünschte Sprache und/oder der Auswahl individueller Grammatiken und/oder Medienmodellen. Die Wissensdomäne kann dazu dienen, die Verbindung zum Nutzer nur im Fall von Konflikten aus einem bestimmten Wissensbereich aufzunehmen, zum Beispiel dem Wissensbereich betreffend "Blätter".

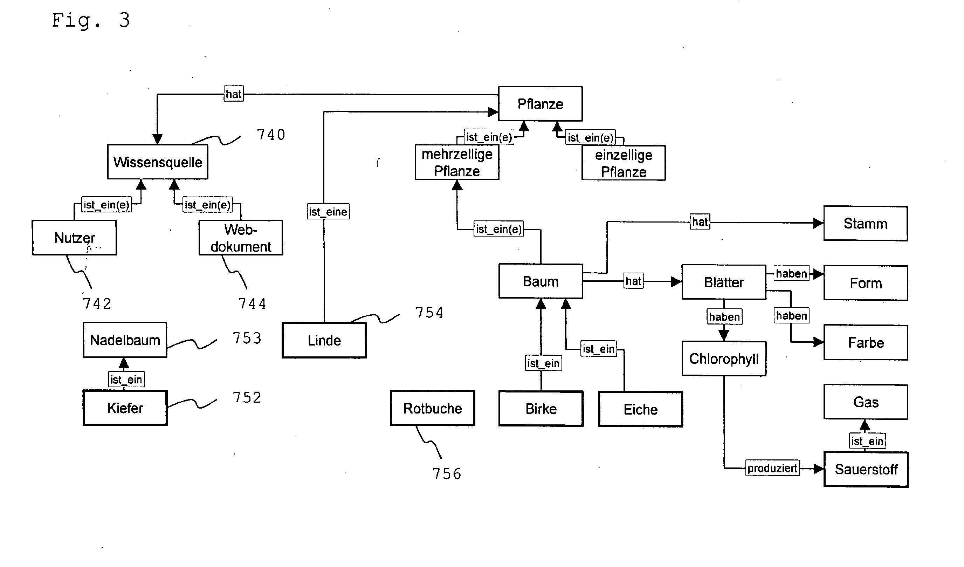

Wie in Fig. 3 dargestellt, können diese Daten auch direkt einzelnen Elementen der Ontologie zur Definition von Wissensquellen 740 für einzelne Teilbereiche oder Teildomänen zugeordnet werden. Treten Konflikte in den einem oder mehreren Nutzern 742 zugeordneten Bereich auf, so werden aktiv durch das System nur diese kontaktiert oder bei Verbindungsaufnahme von der Nutzerseite, unter Auswertung der Nutzerkennung durch das Dialogsystem 300, durch das System abgefragt. Neben Personen als Nutzern 742 können auch Adressen, beispielsweise als Links, von Dokumenten 744 und anderen Ontologien als Wissensquellen 740 für Domänen und Subdomänen in der Ontologie angegeben werden. Diese zum Beispiel gemäß Ranking im Bezug auf die Ähnlichkeit zu einem Referenzdokument, zum Beispiel der vorhandenen Ontologie, ausgewählten Dokumente können dann beispielsweise bei jedem Iterationsschritt des oben beschriebenen Iterationsprozesses erneut in die Extraktion zur Ergänzung der Ontologie einbezogen werden.

So, wie mindestens einem Nutzer mindestens ein Wissensbereich in mindestens einer Ontologie zugeordnet werden kann, können diese Wissensbereiche auch bestimmten Nutzerklassen ohne Kenntnis des Individuums zugeordnet werden. Durch Verfahren der Sprecherklassifizierung kann zum Beispiel festgestellt werden, welche Sprache der Nutzer spricht, was zum Beispiel von Bedeutung für die Auswahl der richtigen sprachspezifischen Grammatik und/oder der Medienmodelle ist. Weiterhin können beispielsweise Alter, Geschlecht, emotionaler Zustand und andere Sprechereigenschaften festgestellt werden. Damit kann mindestens ein Wissensbereich mindestens einer Ontologie auch bestimmten Sprecherklassen bei der Auswahl von durch das Ontologiesystem abzufragenden Personen zugeordnet werden.

Diese Abfragen können somit sowohl nach Verbindungsaufnahme durch betreffende Personen nach Anwendung der Sprecherklassifizierung nutzerklassenspezifisch für mindestens eine zugeordnete Wissensdomäne durch das System vorgenommen werden, als auch bei Kenntnis der mindestens einer Nutzerklasse zugeordneten Nutzer aktiv über mindestens eine Verbindungsaufnahme durch das System initiiert werden.

Für ein multilinguales Dialogsystem 300 sind vorteilhaft jeweils Grammatiken 320 und 340 für die gewünschten Sprachen vorgesehen. Dementsprechend können auch die linguistischen Informationen für Elemente der Ontologie in mehreren Sprachen vorliegen, wobei für unterschiedliche Sprachen gegebenenfalls auch unterschiedliche Attributtypen definiert werden. Zum Beispiel kann der Genus für Sprachen, in denen dieser keine Rolle spielt, auch wegfallen. Ferner können für multilinguale Systeme gegebenenfalls auch Modelle wie zum Beispiel n-gram-Modelle, in den verschiedenen Sprachen für die entsprechenden Elemente vorgesehen sein. Die Informationen, Daten und/oder Modelle können direkt in der Ontologie enthalten sein. Auf sie kann jedoch auch aus der Ontologie heraus verwiesen werden.

Nach oder schon während der Integration des Nutzerwissens über das Dialogsystem 300 in die von dem Ontologiesystem 400 verwalteten Ontologie wird dynamisch der oben beschriebene interative Prozess zur Einbeziehung von Wissen aus anderen Dokumenten mit dynamischer Anpassung der Grammatik bzw. der Medienmodelle, sowie der Anpassung von linguistischen Informationen für Elemente der Ontologie durchgeführt, was gegebenenfalls noch während des Dialogs mit dem Nutzer zur Entstehung neuer Ontologiekonflikte und damit zur Generierung weiterer Anfragen des Systems an den Nutzer führt. Auf diese Art kann dynamisch ständig eine Fortsetzung des Dialoges bis zum Eintreten eines Sättigungszustandes, der durch fehlende Ontologiekonflikte und fehlende zusätzliche Nutzereingaben repräsentiert wird, generiert werden. Der Dialog kann dabei, ausgelöst durch die beschriebenen Ontologiekonflikte durch das Dialogsystem 300 getrieben als auch, ausgelöst durch mindestens eine entsprechende Interaktion, durch den Nutzer getrieben werden.

In den Figuren 2, 3 und 4 sind Beispiele von Ontologien dargestellt. Von unten nach oben verlaufende Beziehungen, wie zum Beispiel die Beziehung 720, beschreiben in den Figuren typischerweise die Beziehung einer Unterklasse oder eines Unterkonzeptes, d.h. dass die jeweils weiter oben angeordnete Klasse auch in der durch die Ontologie beschriebenen Klassenhierarchie weiter oben steht. Seitlich oder nach unten verlaufende Beziehungen, wie zum Beispiel die Beziehung 730, beschreiben typischerweise Attribute von Klassen.

Über einen Entwurfsprozess wurde zum Beispiel der in Fig. 2 dargestellte Ontologieentwurf erstellt, der Bäume beschreibt. Auch kann wenigstens eine Eingabegrammatik 320, die der Auswertung von Nutzereingaben, beispielsweise mittels Spracherkennung, und/oder der Auswertung von Dokumenten dient, vorbereitend in einem Entwurfprozess derart erstellt werden, dass in ihr Ausdrucksweisen für Beziehungen repräsentiert werden, wie zum Beispiel "<element1> .. ist ein .. <element2>", "<element1> .. ist eine .. <element2>", "<element1> .. hat/haben .. <element1>" und/oder "<element1> .. produziert .. <elementl>", wobei <element1> und <element2> jeweils Arten von Elementen bezeichnen, die auch in der Ontologie enthalten sein können.

Nach Fertigstellung des Entwurfs der Ontologie innerhalb des Ontologiesystems 400 wird automatisch ein Prozess angestoßen, der aus den in der Ontologie enthaltenen Elementbegriffen und gegebenenfalls schon enthaltenen Beziehungsbegriffen die entworfene Grammatik 320 gemäß in einer Software implementierter oder explizit in einer Datenbank vorhandener Generierungsregeln 510 ergänzt.

Danach kann bevorzugt automatisch ein Prozess angestoßen werden, der auf direkt verfügbaren Datenbanken und/oder im Internet nach Dokumenten 630 und/oder anderen Ontologien 620 sucht, in denen ähnliche Begriffe und Beziehungen schon beschrieben werden. Zum Beispiel kann in einem gefundenen Dokument, in dem die Begriffe "Pflanze", "Baum" und "Birke" vorkommen und/oder deren Beziehungen beschrieben werden auch der Satz "Die Linde ist eine Pflanze" enthalten sein. Dieser Satz beschreibt die Beziehung "ist eine" zwischen "Linde" und "Pflanze" als eine Klassen- oder Konzeptbeziehung, welche auch in einer anderen grammatikalischen Ausdrucksform vorkommen kann, die in der ersten Entwurfsphase der Grammatik 320 definiert oder aus der entworfenen Ontologie mittels des Grammatik-Generators 500 generiert worden ist. Da das Wort "Pflanze" schon einmal in der Ontologie definiert worden ist, war es auch in die Eingabegrammatik 320 überführt worden. Da nun die Wortfolge "Linde ist eine Pflanze" der Grammatik "<element1> ist eine .. <element2>" entspricht, wird unter automatischer Auswertung unter Zuhilfenahme der Grammatik 320 eine hohe Wahrscheinlichkeit dafür ermittelt, dass das Wort "Linde" 754 mit der beschriebenen Beziehung in die Ontologie aufgenommen und, gegebenenfalls unter Beachtung entsprechender in den Generierungsprozess implementierter Regeln 510, zum Aufbau der Eingabegrammatik 320 in diese eingetragen werden kann.

Auf diese Weise kann die in Fig. 2 dargestellte Ontologie, die als erster Entwurf generiert worden ist, erweitert und/oder korrigiert werden, um zu der in Fig. 3 dargestellten Ontologie zu gelangen. Neben dem Einfügen des Elementes "Linde" 754 und der entsprechenden Beziehung zu dem Element "Pflanze", sind in Fig. 3 noch andere Erweiterungen der Ontologie dargestellt. So wurden die Elemente "Kiefer" 752 und "Nadelbaum" 753 mit deren Relation "ist ein" in die Ontologie eingefügt. Die Relation "produziert" zwischen dem Element "Pflanze" und dem Element "Sauerstoff" wurde entfernt und statt dessen zwischen den Elementen "Chlorophyll" und "Sauerstoff" eingefügt.

In der in Fig. 3 dargestellten Ontologie ist ferner die Information enthalten, dass für das Element "Pflanze" Wissensquellen zur Verfügung stehen, ausgedrückt durch die Beziehung "hat" zwischen den Elementen "Pflanze" und "Wissensquelle" 740. Als mögliche Wissensquellen sind in der Ontologie ferner die Elemente "Nutzer" 742 und "Webdokument" 744 mit den entsprechenden Beziehungen eingetragen. Schließlich wurde das Element "Rotbuche" der Ontologie hinzugefügt, welches jedoch keine Beziehungen zu anderen Elementen der Ontologie aufweist.

Die gefundenen, ähnlichen Dokumente 630 können nun ebenfalls dazu genutzt werden, das beispielsweise als Sprachmodell vorgesehene Medienmodell eines statistisch basierten Medienerkenners, beispielsweise ausgebildet als Sprach- oder Diktiererkenner, zu trainieren oder zu adaptieren, so dass nicht nur die Wissensbasis innerhalb der gefundenen Domäne erweitert wird, sondern auch das Medienmodell.

Durch Auswertung mittels der Grammatik 320 ist es nun ebenfalls möglich, Nutzereingaben zur Erweiterung der in Form einer Ontologie mit entsprechenden, beispielsweise in einer Datenbank 410 abgelegten Instanzen vorliegenden Wissensbasis auszuwerten. Liegt zum Beispiel das Wort "Linde" schon in der durch die Ontologie repräsentierten Wissensbasis und nach automatischer Grammatikgenerierung durch den Grammatik-Generator 500 auch in der Grammatik 320 vor, und es fehlen zum Beispiel Beziehungen zu anderen Elementen, so kann die Ontologie jetzt durch Sprechen des Satzes "Die Linde ist ein Baum" durch einen Nutzer unter Verwendung eines Endgerätes 100, Übertragen zum Dialogsystem 300, Erkennen durch die Eingabeeinheit 310 und Auswerten mittels der Eingabegrammatik 320 und Weiterleitung des Ergebnisses durch den Interaktionsmanager 330 zum Ontologiesystem 400 um die (nicht dargestellte) Beziehung zwischen "Linde" und "Baum" ergänzt werden. Auf diese Weise kann das in der durch die Ontologie repräsentierten Wissensbasis gespeicherte Wissen durch die Eingabe eines Nutzers erweitert werden.

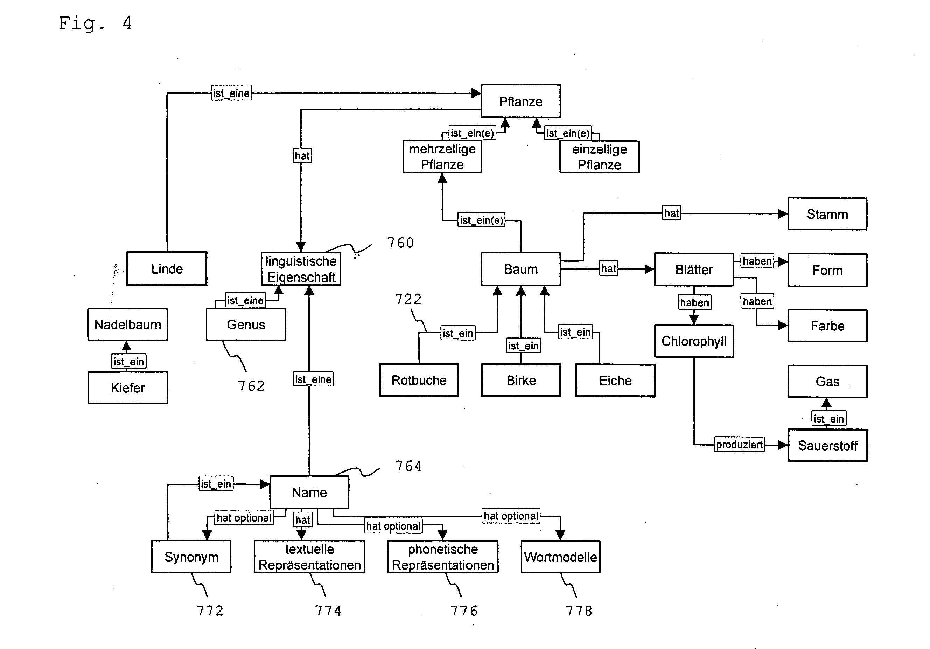

Das Datenverarbeitungssystem 10 verfügt über Mittel zur Feststellung von Konflikten innerhalb der Ontologie, die beispielsweise im Ontologiesystem 400 angeordnet sind. Diese Mittel sind zum Beispiel dazu ausgebildet festzustellen, ob zu einem Element Beziehungen fehlen. Verfügt nun zum Beispiel das in Fig. 3 dargestellte Element "Rotbuche" 756 nicht über eine Beziehung zu anderen Elementen, so kann das Ontologiesystem 400 eine entsprechende Konfliktmeldung 332 dem Interaktionsmanager 330 zuleiten, der daraus mittels der Ausgabeeinheit 350 unter Zuhilfenahme der Ausgabegrammatik 340 eine sprachliche Anfrage an den Nutzer generieren lässt, beispielsweise in Form der Frage "Was ist Rotbuche?". Mit der gesprochenen Antwort "Die Rotbuche ist ein Baum" kann nun auch hier die entsprechende Beziehung 722 in der Ontologie ergänzt werden, wie in Fig. 4 dargestellt ist.

Sind aufgrund unklarer Aussprache oder von Störgeräuschen mehrere N-Best-Ergebnisse des Erkenners möglich, so kann durch einen durch den Interaktionsmanager 330 initiierten Rückfragedialog mit dem Nutzer geklärt werden, welcher der erkannten Begriffe gemeint war.

Da nach Auswertung des Satzes "Die Rotbuche ist ein Baum" und entsprechender Eintragung in die Ontologie nun klar ist, dass "Rotbuche" einen Baum mit Blättern beschreibt, aber beispielsweise der Attributwert für die Farbe der Blätter fehlt, kann nach der Farbe gefragt werden. Der Nutzer kann nun sowohl sprachlich mit dem mit Hilfe der Grammatik 320 auszuwertenden Satz "Die Farbe der Blätter ist rot" antworten oder zum Beispiel auch mit einem Griffel ein rotes Farbfeld auf einem Touchscreen seines Endgerätes 100 berühren.

Die in Fig. 4 dargestellte Ontologie umfasst beispielhaft für die in der Hierarchie am weitesten oben angeordnete Klasse "Pflanze" linguistische Eigenschaften 760. Diese umfassen im dargestellten Ausführungsbeispiel den "Genus" 762, sowie für den "Namen" 764 beispielhaft die Elemente "Synonym" 772, "textuelle Repräsentationen" 774, "phonetische Repräsentationen" 776 und "Wortmodelle" 778.

Durch die Erweiterung von Elementen um Attribute, welche phonetische Repräsentationen oder abgeleitete Wortmodelle in anderen Repräsentationen darstellen, kann die Aufnahme von bis dahin unbekannten Elementen auch aus sprachlichen Äußerungen ermöglicht werden. Die sprachliche Eingabe des Satzes "Die ulme ist ein Baum." kann durch Fehlen des Wortes "Ulme" in der Grammatik 320 direkt noch nicht ausgewertet werden. In einer deterministischen Grammatik ist zum Beispiel für die Erfassung eines fehlenden Ausdrucks ein Leersymbol erforderlich, welches bei der Auswertung der Wortfolge über den Grammatikinterpreter einen entsprechend ausgestatteten Erkenner veranlassen kann, eine mit einer gewissen Wahrscheinlichkeit erkannte Phonemfolge in einem vereinbarten Format an den Interaktionsmanager 330 zu liefern. An den Erkenner müssen hierfür allerdings hohe Anforderungen bezüglich der Störsignalfilterung gestellt werden. Das Ontologiesystem 400 kann nun unter der vom Interaktionsmanager 330 erhaltenen Repräsentation der Baumbezeichnung eine entsprechende Instanz in der Datenbank 410 anlegen, die zwar noch keinen Namen in textueller Form enthält, deren Attribut der phonetischen Repräsentationen jedoch erkannte Phonemfolgen enthält, unter ihnen sind z.B. die Phonemfolgen "ulme" und "palme". Über lokale und/oder im Internet verfügbare Wörterbücher können nun mögliche textuelle Repräsentationen gefunden werden, unter denen im Dialog zwischen Nutzer 100 und Dialogsystem 300 eine Auswahl getroffen werden kann, so dass auch die zutreffende textuelle Repräsentation in die Ontologie eingetragen werden kann.

Die Anbindung von Attributen, die linguistische Eigenschaften repräsentieren, an Elemente einer Ontologie, erlaubt in einem ersten Schritt diese Ontologie als ein, wenn vorerst auch rudimentäres, Medien- bzw. Sprachmodell zu betrachten. Dies bedeutet, dass zumindest Teile der Grammatik und/oder die gesamte Grammatik, sowie das Medienmodell oder Ausgabemodell ihre Repräsentation in der Ontologie finden können. Wird der Genus eines Begriffs zum Beispiel durch einen vorangestellten Artikel beschrieben, was ebenfalls in mindestens einem Attribut eines Ontologieelementes beschrieben werden kann, so könnte er zum Beispiel durch die Spracheingabe ausgewertet und durch das Ontologiesystem 400 eingetragen werden. Aus der Eingabe "Die Rotbuche ist ein Baum." kann damit auf den Genus des Begriffes "Rotbuche" geschlossen werden. Um nun in einer Ontologie repräsentiertes Wissen in mehrsprachigen Dialogsystemen 300 sowohl durch Nutzer weiterzuentwickeln, als auch in verschiedenen erforderlichen Sprachen auszugeben, können in unterschiedlichen Attributen für linguistische Eigenschaften, die Eigenschaften für unterschiedliche Sprachen gespeichert werden. Verschiedene, sprachspezifische, modifizierte BNF-Grammatiken (Backus-Naur-Form) bräuchten so durch die Kombination mit einer linguistisch, durch entsprechende Attribute annotierten Ontologie zumindest nur teilweise allgemeine Spracheigenschaften mit einem reduzierten Satz von Terminalsymbolen zu beschreiben. Dazu ist dann der Zugriff des für die zum Beispiel als Spracherkennung ausgebildete Medienerkennung erforderlichen Interpreters für das Medienmodell oder Grammatikinterpreters auf die Ontologie erforderlich. Dieser wird somit auch oder ausschließlich zum Ontologieinterpreter. Zumindest Teile des Sprachmodells werden in diesem Fall durch das Ontologiesystem 400 selbst verwaltet und innerhalb des Ontologiesystems 400 generiert.

Das beschriebene Verfahren ermöglicht die gemeinsame Einbeziehung von Administrator-, Experten- und Nutzerwissen, sowie von Wissen aus Dokumenten zur Generierung, Korrektur und/oder Ergänzung von Ontologien und den für den Austausch von Informationen zwischen Nutzer und Ontologiesystem notwendigen Grammatiken und/oder Medienmodellen wie zum Beispiel Sprachmodellen.

Unter Anwendung des Verfahrens ist es möglich, Extraktionsregeln zur Gewinnung von Ontologien aus Dokumenten auch aus den ursprünglich nur für den Nutzerdialog vorgesehenen Modellen und/oder Grammatiken zu gewinnen.

Mit besonderem Vorteil kann bei Einbeziehung linguistischer Informationen und deren dynamischer Anpassung während der beschriebenen iterativen Prozesse auf den Aufwand der Verwaltung einer separaten Grammatik verzichtet werden. Liegen diese Informationen für mehrere Sprachen vor, so ist auch eine Bedienung des Systems für Nutzer möglich, die unterschiedliche Sprachen sprechen.

## Patentansprüche

1. Verfahren zum gesteuerten Abfragen von in einem Datenverarbeitungssystem (10) strukturiert gespeicherter Informationen mittels eines Dialogsystems (300), mit den Schritten:
- Bereitstellen wenigstens einer ersten Ontologie (400, 410) zum strukturierten Speichern von Informationen,
- Bereitstellen wenigstens einer in dem Dialogsystem (300) zum Auswerten von Nutzereingaben vorgesehenen Eingabegrammatik (320) in Abhängigkeit der ersten Ontologie.

2. Verfahren nach Anspruch 1, wobei das Bereitstellen der wenigstens einen Eingabegrammatik (320) das Generieren der Eingabegrammatik aus der ersten Ontologie in Abhängigkeit vorgegebener Generierungsregeln (510) umfasst.

3. Verfahren nach Anspruch 1, wobei das Bereitstellen der wenigstens einen Eingabegrammatik (320) die Schritte umfasst:
- Bereitstellen einer vorgegebenen Initialgrammatik (321) als Eingabegrammatik (320) und
- Erweitern und/oder Korrigieren der Initialgrammatik (321) in Abhängigkeit der ersten Ontologie (400, 410) und vorgegebener Erweiterungs- und/oder Korrekturregeln (510).

4. Verfahren nach einem der vorstehenden Ansprüche, wobei die Eingabegrammatik (320) ein Modell zur Beschreibung der Reihenfolge, in der ein Medienerkenner Eingaben erwartet, umfasst.

5. Verfahren nach einem der vorstehenden Ansprüche, ferner umfassend
- Erweitern der ersten Ontologie (400, 410) um Informationen, die mittels Such- und/oder Extraktionsregeln (610) aus Dateien (630) und/oder zweiten Ontologien (620) gewonnen werden.

6. Verfahren nach Anspruch 5, wobei die Such- und/oder Extraktionsregeln (610) in Abhängigkeit der Eingabegrammatik (320) generiert und/oder angepasst werden.

7. Verfahren nach Anspruch 5, wobei die Such- und/oder Extraktionsregeln (610) in Abhängigkeit von in der ersten Ontologie (400, 410) hinterlegten linguistischen Informationen generiert und/oder angepasst werden.

8. Verfahren nach einem der Ansprüche 5 bis 7, wobei das Erweitern der ersten Ontologie (400, 410) das Einfügen wenigstens eines Verweises auf wenigstens eine Datei (630) und/oder eine zweite Ontologie (620) und/oder ein Element einer zweiten Ontologie (620) in die erste Ontologie (400, 410) umfasst.

9. Verfahren nach einem der vorstehenden Ansprüche, wobei die Schritte
- Erweitern und/oder Korrigieren der Eingabegrammatik (320) in Abhängigkeit der ersten Ontologie (400, 410) und vorgegebener Erweiterungs- und/oder Korrekturregeln (510),
- Anpassen und/oder Erweitern der Such- und/oder Extraktionsregeln (610) zur Erweiterung der ersten Ontologie (400, 410) in Abhängigkeit der Eingabegrammatik (320), und
- Erweitern der ersten Ontologie (400, 410) um Informationen, die mittels der Such- und/oder Extraktionsregeln (610) aus Dateien (630) und/oder zweiten Ontologien (620) gewonnen werden, iterativ ausgeführt werden.

10. Verfahren nach einem der vorstehenden Ansprüche, ferner umfassend ein Abfragen Von Informationen durch einen Nutzer.

11. Verfahren nach Anspruch 10, umfassend die Schritte:
- Registrieren von Nutzereingaben mittels einer Eingabeeinheit (310) des Dialogsystems (300),
- Ermitteln einer Nutzeranfrage durch Auswerten der registrierten Nutzereingaben,
- Extrahieren angefragter Informationen aus der ersten Ontologie (400, 410) in Abhängigkeit der ermittelten Nutzeranfrage,
- Ausgeben der extrahierten Informationen mittels einer Ausgabeeinheit (350) des Dialogsystems (300).

12. Verfahren nach einem der vorstehenden Ansprüche, ferner umfassend ein Eintragen und/oder Korrigieren von Informationen in der ersten Ontologie (400, 410) durch einen Nutzer.

13. Verfahren nach Anspruch 12, umfassend die Schritte:
- Registrieren von Nutzereingaben mittels einer Eingabeeinheit (310) des Dialogsystems (300),
- Ermitteln einer Eintragungs- oder Korrekturanfrage durch Auswerten der registrierten Nutzereingaben,
- Erweitern oder Korrigieren der ersten Ontologie (400, 410) in Abhängigkeit der ermittelten Eintragungs- oder Korrekturanfrage.

14. Verfahren nach Anspruch 11 oder 13, wobei das Registrieren und/oder Auswerten von Nutzereingaben das Ausführen wenigstens einer Spracherkennungs-, Freisprech-, Echokompensations-, Sprecherverifizierungs-, Sprechererkennungs-, Sprecherklassifizierungs-, Sprachidentifizierungs-, Sprachsynthese- und/oder Geräuschkompensations-Funktion umfasst.

15. Verfahren nach einem der vorstehenden Ansprüche, wobei die erste Ontologie (400, 410) eine hierarchische Klassenstruktur mit Klassen, Instanzen von Klassen, Beziehungen zwischen Klassen und/oder Attributen umfasst.

16. Verfahren nach Anspruch 15, wobei Konflikte in der Struktur und/oder zwischen den Instanzen der ersten Ontologie (400, 410) automatisch erkannt werden.

17. Verfahren nach Anspruch 16, wobei bei Erkennen eines Konfliktes automatisch eine Anfrage an einen Nutzer generiert wird.

18. Verfahren nach Anspruch 17, wobei
- wenigstens ein Nutzer automatisch ausgewählt wird,
- durch das Dialogsystem (300) automatisch eine Kommunikationsverbindung mit einem Telekommunikationsendgerät (100) des ausgewählten Nutzers hergestellt wird, und
- die generierte Anfrage zu dem Endgerät (100) übermittelt wird.

19. Verfahren nach Anspruch 18, ferner umfassend ein Eintragen und/oder Korrigieren von Informationen in der ersten Ontologie (400, 410) durch den ausgewählten Nutzer in Antwort auf die übermittelte Anfrage zur Beseitigung des erkannten Konfliktes.

20. Verfahren nach Anspruch 18 oder 19, wobei zum automatischen Auswählen eines Nutzers für wenigstens einen Nutzer eine Nutzerkennung und wenigstens ein zugeordneter Wissensbereich einer Ontologie in dem Dialogsystem (300) hinterlegt sind.

21. Verfahren nach Anspruch 20, wobei anfragbare Nutzer vorgegebenen Nutzerklassen zugeordnet sind, wobei' wenigstens einer Nutzerklasse wenigstens ein Wissensbereich einer Ontologie zugeordnet ist.

22. Verfahren nach einem der vorstehenden Ansprüche, wobei die erste Ontologie (400, 410) Informationen in unterschiedlichen Sprachen umfasst.

23. Verfahren nach einem der vorstehenden Ansprüche, umfassend ein Übersetzen von in der ersten Ontologie (400, 410) enthaltenen Informationen von einer ersten Sprache in wenigstens eine zweite Sprache mittels maschineller Übersetzung.

24. Verfahren nach einem der vorstehenden Ansprüche, wobei bei Erweitern und/oder Korrigieren der ersten Ontologie (400, 410) die in der ersten Ontologie (400, 410) in unterschiedlichen Sprachen enthaltenen Informationen mittels maschineller Übersetzung automatisch synchron gehalten werden.

25. Datenverarbeitungssystem (10) zur Bereitstellung des Zugriffs auf strukturiert gespeicherte Informationen, umfassend
- wenigstens einen Speicher (410), in dem Informationen mittels einer ersten Ontologie (400, 410) strukturiert gespeichert sind,
- ein Dialogsystem (300) für den Nutzerzugriff auf die gespeicherten Informationen, das wenigstens
- eine Eingabeeinheit (310) zum Registrieren von Nutzereingaben,
- eine Eingabegrammatik (320) zur Auswertung registrierter Nutzereingaben,
- eine Ausgabegrammatik (340) zum Generieren von Ausgangssignalen, und
- eine Ausgabeeinheit (350) zur Ausgabe generierter Ausgangssignale
aufweist, und
- Mittel (500) zum Generieren und/oder Anpassen der Eingabegrammatik (320) des Dialogsystems (300) in Abhängigkeit der ersten Ontologie (400, 410) und vorgegebener Generierungs- und/oder Anpassungsregeln.

26. Datenverarbeitungssystem nach Anspruch 25, ferner umfassend Mittel (321) zum Bereitstellen einer Initialgrammatik als Eingabegrammatik.

27. Datenverarbeitungssystem nach einem der vorstehenden Ansprüche, ferner umfassend Mittel (600) zum Suchen und/oder Extrahieren von Informationen aus Dateien (630) und/oder zweiten Ontologien (620) zur Erweiterung der ersten Ontologie (400) in Abhängigkeit vorgegebener Such- und/oder Extraktionsregeln.

28. Datenverarbeitungssystem nach Anspruch 27, ferner umfassend Mittel zum Generieren und/oder Anpassen der Such- und/oder Extraktionsregeln (610) in Abhängigkeit der Eingabegrammatik (320) und/oder in Abhängigkeit von in der ersten Ontologie hinterlegten linguistischen Informationen.

29. Datenverarbeitungssystem nach Anspruch 27 oder 28, wobei die Mittel (600) zum Suchen und und/oder Extrahieren von Informationen zum Einfügen von Verweisen auf wenigstens eine Datei (630) und/oder eine zweite Ontologie (620) und/oder ein Element einer zweiten Ontologie (620) in die erste Ontologie (400, 410) ausgebildet sind.

30. Datenverarbeitungssystem nach einem der vorstehenden Ansprüche, umfassend Mittel zum Extrahieren von Informationen aus der ersten Ontologie (400, 410) in Antwort auf eine durch das Dialogsystem (300) erkannte Nutzeranfrage.

31. Datenverarbeitungssystem nach einem der vorstehenden Ansprüche, umfassend Mittel zum Eintragen und/oder Korrigieren von Informationen in der ersten Ontologie (400, 410) in Antwort auf eine durch das Dialogsystem (300) erkannte Eintragungs- oder Korrekturanfrage eines Nutzers.

32. Datenverarbeitungssystem nach einem der vorstehenden Ansprüche, wobei das Dialogsystem (300) wenigstens ein Funktionsmodul zum Ausführen einer Spracherkennungs-, Freisprech-, Echokompensations-, Sprecherverifizierungs-, Sprechererkennungs-, Sprecherklassifizierungs-, Sprachidentifizierungs-, Sprachsynthese- und/oder Geräuschkompensations-Funktion umfasst.

33. Datenverarbeitungssystem nach einem der vorstehenden Ansprüche, umfassend Mittel zum automatischen Erkennen von Konflikten in der Struktur und/oder zwischen den Instanzen der ersten Ontologie (400, 410).

34. Datenverarbeitungssystem nach Anspruch 33, ferner umfassend Mittel zum automatischen Generieren einer an einen Nutzer gerichteten Anfrage bei Erkennen eines Konfliktes in der Struktur und/oder zwischen den Instanzen der ersten Ontologie (400, 410).

35. Datenverarbeitungssystem nach Anspruch 34, wobei das Dialogsystem (300) dazu ausgebildet ist, automatisch wenigstens einen Nutzer auszuwählen, eine Kommunikationsverbindung zu einem Telekommunikationsendgerät (100) des ausgewählten Nutzers aufzubauen, und eine generierte, an den ausgewählten Nutzer gerichtete Anfrage zu dem Endgerät (100) zu übermitteln.

36. Datenverarbeitungssystem nach Anspruch 35, wobei das Dialogsystem (300) Speichermittel zum Hinterlegen einer Nutzerkennung und wenigstens eines zugeordneten Wissensbereiches einer Ontologie für wenigstens einen Nutzer aufweist.

37. Datenverarbeitungssystem nach Anspruch 36, wobei jede Nutzerkennung wenigstens einer Nutzerklasse und wenigstens einer Nutzerklasse wenigstens ein Wissensbereich einer Ontologie zugeordnet ist.

38. Datenverarbeitungssystem nach einem der vorstehenden Ansprüche, wobei die erste Ontologie (400, 410) Informationen in unterschiedlichen Sprachen umfasst.

39. Datenverarbeitungssystem nach Anspruch 38, umfassend Mittel zum maschinellen Übersetzen von in der ersten Ontologie (400, 410) enthaltenen Informationen von einer ersten Sprache in wenigstens eine zweite Sprache.
